# EUROPÄISCHE PATENTSCHRIFT

(11) **EP 1 045 271 B1**
(45) Veröffentlichungstag und Bekanntmachung des Hinweises auf die Patenterteilung: **21.01.2004**
(21) Anmeldenummer: 00102684.8
(22) Anmeldetag: 09.02.2000
(51) Int. Cl.: G02F 1/1333

(54) **Flüssigkristallanzeige**
Liquid crystal display device
Dispositif d'affichage à cristaux liquides

(30) Priorität: 13.04.1999 DE 19916738
(43) Veröffentlichungstag der Anmeldung: 18.10.2000
(73) Patentinhaber: Siemens Aktiengesellschaft, 80333 München (DE)
(72) Erfinder: Kolibius, Hans, 64832 Babenhausen (DE); Brandt, Peter, 63739 Aschaffenburg (DE); Mayer, Klaus, 63179 Obertshausen (DE)

(56) Entgegenhaltungen:
- EP-A- 0 399 506
- WO-A-98/40872
- DE-A- 2 850 518
- DE-A- 3 025 784
- DE-A- 3 639 008
- DE-A- 19 603 352
- US-A- 5 273 475
- US-A- 5 436 744
- STEIN A ET AL: "31.3: HIGH-TEMPERATURE ACRYLIC PLASTIC SUBSTRATES: THERMAL, CHEMICAL, AND MECHANICAL PROPERTIES" SID INTERNATIONAL SYMPOSIUM DIGEST OF TECHNICAL PAPERS,US,SANTA ANA, SID, Bd. 28, 13. Mai 1997 (1997-05-13), Seiten 817-820, XP000722819 ISSN: 0097-966X

## Beschreibung

Die Erfindung betrifft eine Flüssigkristallanzeige, insbesondere für ein Kraftfahrzeug, mit einer zwischen zwei LCD-Scheiben eingeschlossenen Flüssigkristallschicht und einer Kontaktierung, wobei eine LCD-Scheibe die Flüssigkristallschicht zumindest zu einer Seite hin mit einem Überstand überragt und wobei die Kontaktierung auf diesem Überstand durch zu einem Rand des Überstandes führende Leiterbahnen gebildet ist.

Flüssigkristallanzeigen der vorstehenden Art werden beispielsweise in heutigen Kraftfahrzeugen eingesetzt und sind allgemein bekannt. Ihre LCD-Scheiben können aus Glas bestehen und völlig plan sein. Bekannt ist es jedoch auch, solche LCD-Scheiben aus Kunststoff zu fertigen und konkav gekrümmt auszubilden, damit sich bei Verwendung in einem Kraftfahrzeug die helle Umgebung nicht auf dem Display spiegelt.

Zur Kontaktierung der Flüssigkristallanzeige führen meist aus der Flüssigkristallanzeige elektrische Leiter heraus; welche mit einem Stecker versehen sind, so dass man mit seiner Hilfe nach dem Einbau der Flüssigkristallanzeige eine Steckverbindung herstellen kann. Hierbei besteht die Gefahr einer Beschädigung der Leiter. Gemäß der WO 98/40872 sind die Leiterbahnen auf dem Überstand ausgebildet und mittels eines Verbinders am Rand des Überstandes mit einer Zuleitung verbunden. Auf dem Überstand sind auch elektronische Steuerungselemente angeordnet.

Flüssigkristallanzeigen der genannten Art sind häufig von hinten beleuchtet.'Die Realisierung einer solchen Beleuchtung ist mit einem erheblichen Aufwand verbunden. Aus der EP 0 399 506 A2 ist eine Flüssigkristallanzeige mit seitlich an einer, keinen Überstand aufweisenden Flüssigkristallanzeige angeordneten Lichtquellen bekannt. Die Art der Verbindung mit der Anzeige sowie die Stromversorgung der Lichtquelle ist nicht näher dargestellt.

Der Erfindung liegt das Problem zugrunde, eine Flüssigkristallanzeige der eingangs genannten Art so auszubilden, dass der Ablesekontrast durch eine Beleuchtung verbessert ist, wobei die dafür notwendige Lichtquelle in einfacher weise realisiert ist.

Dieses Problem wird erfindungsgemäß dadurch gelöst, dass auf dem Überstand zumindest eine Lichtquelle angeordnet ist, die Licht von der Seite her in die Flüssigkristallschicht gelangen lässt.

Zum Befestigen der Lichtquelle an der Flüssigkristallanzeige wird somit der Überstand genutzt, was relativ einfach zu realisieren ist. Die dort vorhandenen Leiterbahnen können dabei auch zur Stromversorgung der Lichtquelle dienen.

Da der Überstand die Funktion einer Leiterplatte aufweist, kann auf dem Überstand zumindest ein elektronisches Bauteil angeordnet sein. Dieses Bauteil dient vorteilhaft der Ansteuerung der Flüssigkristallschicht.

Flüssigkristallanzeigen werden oftmals in unmittelbarer Nähe anderer Anzeigen angeordnet oder in andere Anzeigen integriert. Dann ist der zur Verfügung stehende Platz in Haupterstreckungsebene der Flüssigkristallanzeige oftmals stark eingeschränkt. Der Platzbedarf für die erfindungsgemäße Flüssigkristallanzeige in Haupterstreckungsrichtung der Flüssigkristallanzeige ist besonders gering, wenn gemäß einer anderen Weiterbildung der Erfindung der Überstand gegenüber der Haupterstreckungsrichtung der Flüssigkristallzelle abgewinkelt verläuft.

Flüssigkristallanzeigen werden sehr häufig transmissiv beleuchtet, indem man hinter ihnen einen Lichtkasten mit einer Lichtquelle anordnet. Die erfindungsgemäße Flüssigkristallanzeige nutzt den in einem solchen Lichtkasten vorhandenen Platz optimal aus und kann einen Teilbereich des Lichtkastens bilden, wenn gemäß einer anderen Weiterbildung der Erfindung die LCD-Scheibe zu beiden Seiten der Flüssigkristallzelle jeweils einen abgewinkelten Überstand aufweist und diese Überstände Wandteile eines Lichtkastens bilden.

Wenn bei der erfindungsgemäßen Flüssigkristallanzeige zumindest die obere LCD-Scheibe aus Kunststoff besteht, dann kann man die abgewinkelten Überstände besonders einfach dadurch bilden, dass die Überstände durch die jeweils obere LCD-Platte gebildet sind und dass die Überstände jeweils über ein Filmscharnier mit dem übrigen Bereich der LCD-Platte Verbindung haben.

Der bei einem Zeigerinstrument erforderliche Zeiger kann für zusätzliche Anzeigen genutzt werden, wenn die Flüssigkristallanzeige als Zeiger für ein Anzeigeinstrument ausgebildet ist.

Verschiedene Flüssigkristallanzeigen können mit geringem Aufwand zu einer baulichen Einheit zusammengefasst werden, wenn eine Flüssigkristallanzeige auf einer gemeinsamen LCD-Scheibe mehrere Flüssigkristallzellen aufweist.

Oftmals besteht der Wunsch, eine Flüssigkristallanzeige auf einer vorgegebenen, gewölbten Fläche anzuordnen. Das ist möglich, wenn die Flüssigkristallanzeige entsprechend einer vorgegebenen Kontur gewölbt ausgeführt ist. Eine solche Flüssigkristallanzeige kann man beispielsweise auf eine gewölbte Windschutzscheibe nachträglich anbringen.

Von besonderem Vorteil ist es, wenn beide LCD-Scheiben aus Kunststoff bestehen. Derartige Kunststoff-Displays können besonders leicht bearbeitet und in ihrer Form an individuelle Erfordernisse angepaßt werden. Z. B. ist denkbar, solche Displays - beispielsweise einen Rahmen bildend - einfach auszustanzen. Auf diese Weise sind bei gestaffelter Anordnung rahmenförmiger Displays hintereinander Mehrebenen-Effekte bis hin zu 3D-Effekten der Darstellungen auf den Displays erzielbar.

Die Erfindung lässt verschiedene Ausführungsformen zu. Mehrere davon sind in der Zeichnung schematisch dargestellt und werden nachfolgend beschrieben. Die Zeichnung zeigt in
- Fig. 1: einen Querschnitt durch eine Flüssigkristallanzeige,
- Fig. 2: eine perspektivische Darstellung einer zweiten Ausführungsform einer Flüssigkristallanzeige,
- Fig. 3: eine als Zeiger ausgebildete Flüssigkristallanzeige,
- Fig. 4: eine perspektivische Darstellung einer weiteren Ausführungsform einer Flüssigkristallanzeige,
- Fig. 5: einen Schnitt durch eine Flüssigkristallanzeige nach der Erfindung,
- Fig. 6: eine perspektivische Darstellung einer als Kombianzeige ausgebildeten Flüssigkristallanzeige,
- Fig. 7: eine perspektivische Darstellung einer weiteren Ausführungsform einer Flüssigkristallanzeige,
- Fig. 8: eine Seitenansicht einer weiteren Ausführungsform einer Flüssigkristallanzeige.

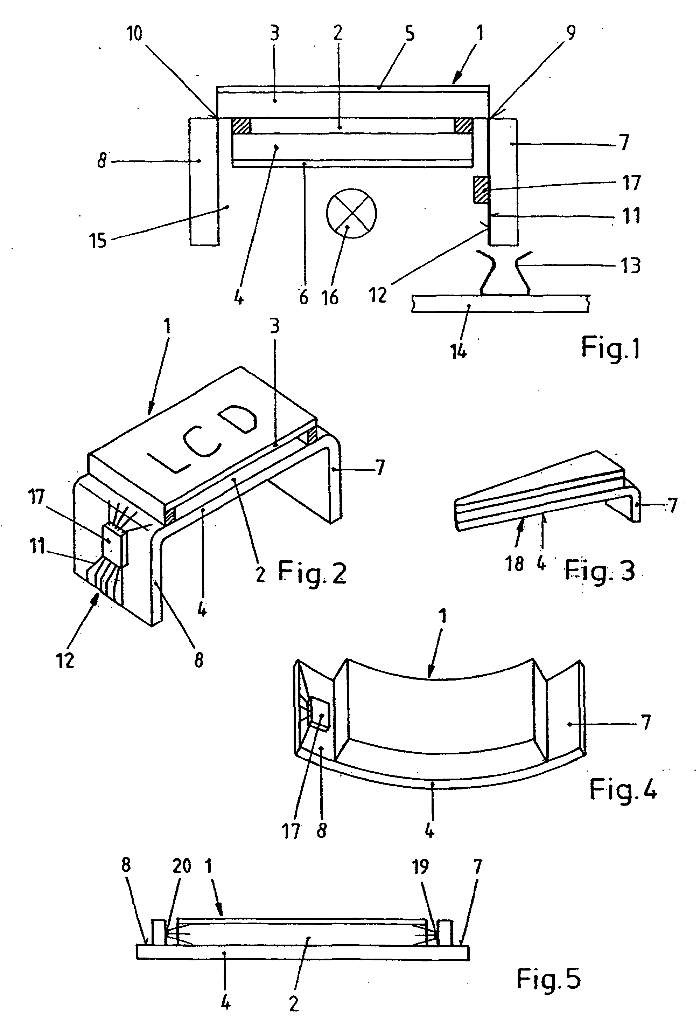

Die Figur 1 zeigt eine Flüssigkristallanzeige 1, bei der eine Flüssigkristallzelle 2 zwischen zwei LCD-Scheiben 3, 4 vorgesehen ist. Wie allgemein üblich, befindet sich außenseitig auf jeder der LCD-Scheiben 3, 4 jeweils ein Polarisator 5, 6. Wichtig ist, dass die LCD-Scheibe 3 auf beiden Seiten der Flüssigkristallzelle 2 einen Überstand 7, 8 hat, der bei dieser Ausführungsform gegenüber der Haupterstreckungsrichtung der Flüssigkristallzelle jeweils um 90° abgewinkelt ausgerichtet ist und über ein Filmscharnier 9, 10 mit der LCD-Scheibe 3 Verbindung hat, die bei diesem Ausführungsbeispiel aus Kunststoff bestehen soll. Auf dem Überstand 7 sind Leiterbahnen 11 dargestellt, die bis zum unteren Rand des Überstandes 7 verlaufen, wo auf diese Weise eine Kontaktierung 12 entsteht. Diese Kontaktierung 12 erhält mit einem klammerartigen Kontakt 13 einer Leiterplatte 14 elektrisch Verbindung, wenn man die Flüssigkristallanzeige 1 in Figur 1 gesehen entsprechend nach unten bewegt.

Da die beiden Überstände 7, 8 zur Flüssigkristallanzeige 1 abgeknickt verlaufen, vermögen sie Wandbereiche eines Lichtkastens 15 zu bilden, in welchem eine Lichtquelle 16 angeordnet ist, mit der die Flüssigkristallzelle 1 von der einem Betrachter abgewandten Seite her durchleuchtet werden kann. Ebenfalls dargestellt ist in Figur 1 ein elektronisches Bauteil 17, welches auf dem Überstand 7 angeordnet ist und beispielsweise der Steuerung der Flüssigkristallzelle 2 dient.

Bei der Ausführungsform nach Figur 2 bildet die untere LCD-Scheibe 4 die beiden seitlichen Überstände 7, 8. Der Überstand 8 trägt das elektronische Bauteil 17, also beispielsweise einen Chip. Die Kontaktierung 12 ist genau wie bei dem zuvor gezeigten Bauteil durch bis an den Rand des Überstandes 8 führende Leiterbahnen 11 gebildet.

Die Figur 3 zeigt einen Zeiger 18, der als Flüssigkristallanzeige ausgebildet ist. Hierzu hat die untere LCD-Scheibe 4 den Überstand 7, der genau wie in Figur 1 gezeigt ausgebildet sein kann.

Die Flüssigkristallanzeige 1 gemäß Figur 4 ist als Ganzes in einer Ebene bogenförmig gekrümmt ausgeführt . Auch bei ihr bildet die eine LCD-Scheibe 4 die Überstände 7, 8, wobei der Überstand 8 übereinstimmend mit dem Überstand 8 nach Figur 2 ausgebildet ist.

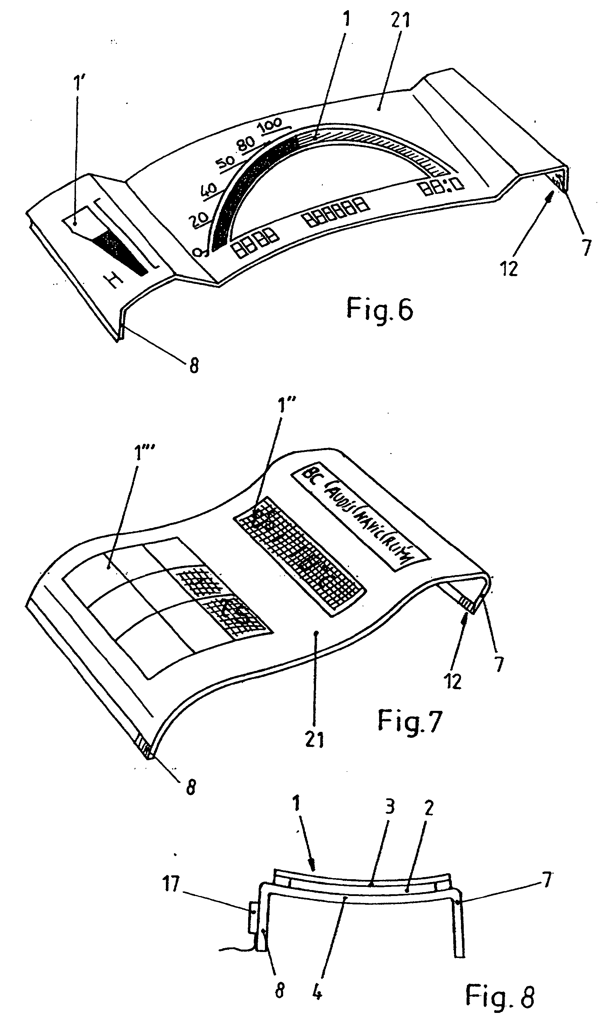

Bei der Ausführungsform nach der Erfindung nach Figur 5 ist die Flüssigkristallanzeige 1 plan ausgebildet. Auf den Überständen 7, 8 der LCD-Scheibe 4 ist jeweils eine Lichtquelle 19, 20 angeordnet, die Licht von der Seite her in die Flüssigkristallzelle 2 gelangen lässt.

Die Figuren 6 und 7 zeigen großflächige Displays für die Verwendung als Kombinationsinstrument (Figur 6) eines Kraftfahrzeugs beziehungsweise zur Anbringung in einer Kraftfahrzeugmittelkonsole (Figur 7). Gemeinsam mit der Figur 1 ist, dass jeweils zwei abgewinkelte Überstände 7, 8 vorhanden sind, die eine Kontaktierung 12 bilden. Beide Displays haben eine großflächige LCD-Scheibe 21, auf der mehrere Flüssigkristallanzeigen 1, 1', 1", 1'" angeordnet sind.

Die Ausführungsform nach Figur 8 unterscheidet sich von der nach Figur 2 dadurch, dass die Flüssigkristallanzeige 1 zur Seite des Betrachters hin konkav ausgebildet ist, was technisch leicht verwirklicht werden kann, wenn man die gesamte Anordnung, umfassend die beiden LCD-Scheiben 3, 4, aus Kunststoff ausführt. Die Überstände 7, 8 sind genau wie in Figur 2 ausgebildet.

## Patentansprüche

1. Flüssigkristallanzeige, insbesondere für ein Kraftfahrzeug, mit einer zwischen zwei LCD-Scheiben eingeschlossenen Flüssigkristallschicht und einer Kontaktierung, wobei eine LCD-Scheibe (3) die Flüssigkristallschicht (2) zumindest zu einer Seite hin mit einem Überstand (7, 8) überragt und wobei die Kontaktierung (12) auf diesem Überstand (7) durch zu einem Rand des Überstandes (7) führende Leiterbahnen (11) gebildet ist, **dadurch gekennzeichnet, dass** auf dem Überstand (7, 8) zumindest eine Lichtquelle (19, 20) angeordnet ist, die Licht von der Seite her in die Flüssigkristallschicht (2) gelangen lässt.

2. Flüssigkristallanzeige nach Anspruch 1, bei der auf dem Überstand (7, 8) zumindest ein elektronisches Bauteil (17) angeordnet ist.

3. Flüssigkristallanzeige nach einem der vorangehenden Ansprüche, die auf einer gemeinsamen LCD-Scheibe (21) mehrere Flüssigkristall zellen aufweist.

4. Flüssigkristallanzeige nach einem der vorangehenden Ansprüche, die entsprechend einer vorgegebenen Kontur gewölbt ausgeführt ist.

5. Flüssigkristallanzeige nach einem der vorangehenden Ansprüche, bei der beide LCD-Scheiben aus Kunststoff bestehen.

## Claims

1. Liquid crystal display, in particular for a motor vehicle, having a liquid crystal layer which is sandwiched between two LCD panels, and a contacting means, one LCD panel (3) projecting beyond the liquid crystal layer (2) at least on one side with a projection (7, 8), the contacting means (12) being formed on this projection (7) by means of conductor tracks (11) which lead to an edge of the projection (7), **characterized in that** at least one light source (19, 20) which allows light to pass into the liquid crystal layer (2) from the side is arranged on the projection (7, 8).

2. Liquid crystal display according to Claim 1, in which at least one electronic component (17) is arranged on the projection (7, 8).

3. Liquid crystal display according to one of the preceding claims, which has a plurality of liquid crystal cells on a common LCD panel (21).

4. Liquid crystal display according to one of the preceding claims, which is of curved construction so as to correspond to a predefined contour.

5. Liquid crystal display according to one of the preceding claims, in which both LCD panels are composed of plastic.

## Revendications

1. Dispositif d'affichage à cristaux liquides, destiné notamment à un véhicule automobile, comprenant une couche de cristaux liquides, enfermée entre deux plaques d'un afficheur à cristaux liquides et une connexion, une plaque de l'afficheur à cristaux liquides (3) débordant de la couche de cristaux liquides (2) au moins sur un côté par une saillie (7, 8) et la connexion (12) étant formée sur ladite saillie (7), par des circuits imprimés (11), conduisant vers un bord de la saillie (7), **caractérisé en ce que** au moins une source lumineuse (19, 20) laissant pénétrer de la lumière par le côté du dispositif d'affichage à cristaux lumineux (2) est disposée sur la saillie (7, 8).

2. Dispositif d'affichage à cristaux liquides selon la revendication 1, dans lequel au moins un élément électronique (17) est disposé sur la saillie (7, 8).

3. Dispositif d'affichage à cristaux liquides selon l'une quelconque des revendications précédentes, présentant plusieurs cellules à cristaux liquides, sur une plaque commune d'un afficheur à cristaux liquides (21).

4. Dispositif d'affichage à cristaux liquides selon l'une quelconque des revendications précédentes, qui est conçue selon un contour concave prédéfini.

5. Dispositif d'affichage à cristaux liquides selon l'une quelconque des revendications précédentes, dans lequel les deux plaques de l'afficheur à cristaux sont conçues en matière plastique.
